(19) **Europäisches Patentamt**
**European Patent Office**
**Office européen des brevets**

(11) **EP 1 673 761 B1**

(12) **EUROPEAN PATENT SPECIFICATION**

(45) Date of publication and mention
of the grant of the patent:
**09.05.2007 Bulletin 2007/19**

(51) Int Cl.:
**G10L 15/06** (2006.01)     **G10L 15/20** (2006.01)

(21) Application number: **04770165.1**

(22) Date of filing: **05.10.2004**

(86) International application number:
**PCT/IB2004/051969**

(87) International publication number:
**WO 2005/036525 (21.04.2005 Gazette 2005/16)**

(54) **ADAPTATION OF ENVIRONMENT MISMATCH FOR SPEECH RECOGNITION SYSTEMS**

ANPASSUNG EINER UMGEBUNGSFEHLANPASSUNG FÜR SPRACHERKENNUNGSSYSTEME

ADAPTATION PAR RAPPORT A UN DEFAUT D'ADAPTATION AMBIANTE POUR DES SYSTEMES
DE RECONNAISSANCE VOCALE

(84) Designated Contracting States:
**AT BE BG CH CY CZ DE DK EE ES FI FR GB GR
HU IE IT LI LU MC NL PL PT RO SE SI SK TR**

(30) Priority: **08.10.2003 EP 03103727**

(43) Date of publication of application:
**28.06.2006 Bulletin 2006/26**

(73) Proprietors:
• **Philips Intellectual Property & Standards GmbH
20099 Hamburg (DE)**
Designated Contracting States:
**DE**
• **Koninklijke Philips Electronics N.V.
5621 BA Eindhoven (NL)**
Designated Contracting States:
**AT BE BG CH CY CZ DK EE ES FI GB HU LI**

(72) Inventor: **Geller, Dieter**
**Philips I.P. & Standards Gmbh
52066 Aachen (DE)**

(74) Representative: **Volmer, Georg**
**Philips Intellectual Property & Standards GmbH,
Postfach 50 04 42
52088 Aachen (DE)**

(56) References cited:
**EP-A- 0 694 906          US-A- 5 778 340**

**Description**

The present invention relates to the field of speech recognition systems and more specifically to the adaptation of a speech recognition system to varying environmental conditions.

Speech recognition systems transcribe a spoken dictation into written text. The process of text generation from speech can typically be divided into the steps of receiving a sound signal, pre-processing and performing a signal analysis, recognition of analyzed signals and outputting of recognized text.

The receiving of a sound signal is provided by any means of recording, as e.g. a microphone. In the signal analysing step, the received sound signal is typically segmented into time windows covering a time interval typically in the range of several milliseconds. By means of a Fast Fourier Transform (FFT) the power spectrum of the time window is computed. Further a smoothing function with typically triangle shaped kernels is applied to the power spectrum and generates a feature vector. The single components of the feature vector represent distinct portions of the power spectrum that are characteristic for content of speech and therefore ideally suited for speech recognition purpose. Furthermore a logarithmic function is applied to all components of the feature vector resulting in feature vectors of a log-spectral domain. The signal analysis step may further comprise an environmental adaptation as well as additional steps, as e.g. applying a cepstral transformation or adding derivatives or regression deltas to the feature vector.

In the recognition step, the analyzed signals are compared with reference signals derived from training speech sequences being assigned to a vocabulary. Furthermore grammar rules as well as context dependent commands can be performed before the recognized text is outputted in a last step.

Environmental adaptation is an important step within a signal analysis procedure. Essential sources of environmental mismatch between trained speech reference and recognition data are for example different signal to noise ratios, different recording channel noise or different speech-and-silence proportions.

EP 0 694 906 discloses a method of environmental adaptation of a speech recognition system which involves calculating a silence probability of the feature vectors so as to perform the adaptation for silence and speech periods.

US Pat. No. 5,778,340 discloses a speech recognition system having an adaptation function. Here speech input is converted into the feature vectors series which is fed to a preliminary recognizer. The preliminary recognizer executes preliminary recognition by calculating similarity measures between the input pattern and a reference pattern stored in a reference pattern memory. In this way top candidates are determined by means of the calculated similarity measures. A reference pattern adaptor executes adaptation of the reference patterns based on the reference patterns, the input pattern, the top candidates and newly stores the adapted reference pattern in the reference pattern memory. A final recognizer then executes the speech recognition of the input pattern by using the newly stored reference patterns corresponding to the top candidates.

The adaptation means comprise the separation of an input pattern in speech periods and noise periods. Noise periods correspond to sound intervals of a speech discontinuity. US Pat. No. 5,778,340 further discloses a calculation of mean spectra for noise and speech periods of the reference and input patterns. The adaptation of either input or reference pattern is then performed by means of some sort of adaptation function making use of the calculated spectra. Anyhow this method is based on a hard decision whether a sound interval represents speech or noise. Depending on the received sound signal and the additional noise such a decision cannot be made unambiguously. In some critical situation the underlying system may therefore interpret a noise period as a speech period and vice versa.

US. Pat. No. 2002/0091521A1 describes a technique for rapid speech recognition under mismatched training and testing conditions. The illustrated technique is based on a maximum likelihood spectral transformation (MLST). Here speech feature vectors of real time utterances are transformed in a linear spectral domain such that a likelihood of the utterances is increased after the transformation. The maximum likelihood spectral transformation estimates two parameters corresponding to convolutional noise and adaptive noise in the linear spectral domain. After the two noise parameters have been estimated, a transformation of the feature vectors is performed in order to increase the likelihood of testing utterances. Since the described technique is applied in the linear spectral domain and since the dynamic range of speech is fairly large, reliable and robust determination of the necessary parameters might be difficult.

US Pat. No. 2003-0050780A1 describes a speaker adaptation upon input speech that is provided in the presence of background noise. Here a linear approximation of a background noise is applied after the feature extraction and prior to speaker adaptation to allow the system to adapt the speech model to the enrolling user without distortion from background noise. Here a speaker adaptation module employs an inverse linear approximation operator to remove the effect of the background noise prior to adaptation. The result of the inverse approximation is a set of modified observation data that has been cleaned up to remove the effect of background noise. A noise compensated recognizer described in the US Pat. No. 2003-0050780A1 uses acoustic models being developed under certain noise conditions and that are then used under different noise conditions. Therefore an estimate of the noise level difference between the at least two noise level differences must be assessed. This is typically performed by a feature extraction module which extracts features from a pre-speech frame before the input speech utterance begins.

The present invention, as defined by the appended independent claims, aims to provide an improved method and apparatus for the adaptation of a speech recognition system to various environmental conditions.

The invention provides a method of environmental adaptation of a speech recognition system by making use of a generation of a sequence of feature vectors in the log-spectral domain, the calculation of probabilities, whether a received sound interval represents speech or a speech discontinuity, the calculation of mean values for speech and mean values for silence intervals for speech to be recognized and training speech, respectively.

Each feature vector of the sequence of feature vectors in the log-spectral domain is descriptive of a power spectrum of the speech to be recognized that corresponds to a time window covering a distinct time interval. The speech recognition system typically comprises a set of reference feature vectors that were recorded under training conditions for recognition purposes. The method of the invention is principally based on a transformation of feature vectors such that a mismatch due to different environmental recording conditions is minimized.

According to a preferred embodiment of the invention the method does not strictly separate whether a sound interval represents speech or a speech discontinuity in the form of silence. Instead the method determines and calculates a probability that a sound interval represents speech or silence. In this way, a hard, potentially wrong, decision is avoided increasing the overall reliability of the entire speech recognition system.

For each component of the feature vector the method calculates a silence probability by means of a monotonous decreasing probability function. The parameter needed by the probability function is simply the modulus of the respective feature vector component. The larger the feature vector component the smaller the probability that the respective feature vector component represents a silence interval. The corresponding speech probability is given by the difference between the silence probability and unity.

The method further calculates a mean value for silence and speech intervals for each feature vector component by means of a mean function. On the basis of a subset of feature vectors, the mean function provides an average value for the respective feature vector component based on the silence and speech probabilities as weights. Correspondingly, the method further calculates mean values for silence and speech of the single component of the training feature vectors. The essential transformation function for the environmental adaptation is then performed for each component of the feature vectors separately on the basis of the feature vector component itself, the silence probability of the feature vector component, the mean value for silence and the mean value for speech of the respective feature vector components of a subset of feature vectors and a mean value for silence and a mean value for speech of the respective feature vector components of a subset of training feature vectors.

Comparison between mean values for silence of a subset of feature vectors and a subset of training feature vectors gives a general indication about the noise level and/or difference environmental recording conditions of the recorded speech. Similarly the mean values for speech of a subset of feature vectors and the subset of training feature vectors can be compared. Typically the transformation of feature vector components makes use of this comparison in combination with the probability values of the feature vector component.

According to a further preferred embodiment of the invention, a calculation of a speech probability of each feature vector component is performed. Typically the method makes use of the monotonous decreasing probability function for generating the silence probability and subsequently subtracting the silence probability from the number 1. According to this embodiment the transformation of the feature vector components takes explicitly into account the calculated speech probability.

According to a further preferred embodiment of the invention, the mean function for generating mean values for silence and speech for the feature vector components as well as the training feature vector components is realized in the form of a moving weighted average function. Averaging is performed over a subset of feature vectors. For example the mean value for silence of a distinct feature vector component is given by the sum over the product of the respective feature vector components multiplied by the silence probability of the respective feature vector components and divided by the sum of all respective silence probabilities, wherein the summation index is running over all feature vectors of the subset of feature vectors.

The calculation of silence or speech mean values of feature vector components is performed for the subset of feature vectors in the same way as for the subset of training feature vectors. Both subsets typically comprise the same number of feature vectors. The mean values of the feature vectors being permanently acquired during the speech recognition dynamically change and have to be recalculated during the process of speech recognition, whereas the mean values representing the training feature vectors remain constant and can therefore be stored by some kinds of storing means. In this way the method dynamically adapts to varying environmental conditions. This provides a high reliability and a high flexibility of the speech recognition system.

According to a preferred embodiment of the invention, the subset of feature vectors for the calculation of mean values for silence and speech of feature vector components typically comprises a number of 10, preferably a number between 20 and 30 feature vectors.

According to a further preferred embodiment of the invention, the monotonously decreasing probability function comprises a slope constant ($\alpha$) which is descriptive of the slope of the monotonously decreasing probability function. In this way the assignment of a speech probability or a silence probability to a distinct feature vector component can be manually adapted by variation of the slope constant ($\alpha$). This is of extreme practical use since the speech recognition system can be manually adapted to different types of environmental noise, such as e.g. white noise or other types of more irregular noise patterns.

According to a further preferred embodiment of the invention, the silence probability function of the mean value for silence plus the appropriate variance value for silence results in a silence probability of 0.5.

According to a further preferred embodiment of the invention, the silence probability function is given by a Sigmoid function whose specific form is further specified by:

$$P_{Sil} = 1 - \frac{1}{1 + \exp\left(\left(M_{Sil} + V_{Sil} - F_c\right)\alpha / V_{Sil}\right)},$$

where:

$M_{Sil}$ : mean value for silence of feature vectors,

$V_{Sil}$ : variance value for silence of feature vectors,

$F_c$ : feature vector component.

According to a further preferred embodiment of the invention, the transformation function for the feature vector components is given by the following mathematical model:

$$F_{c,new} = F_{c,old} + \left(MTR_{Sil} - M_{Sil}\right)P_{Sil} + \left(MTR_{Sp} - M_{Sp}\right)P_{Sp},$$

where:

$F_{c,new}$ : transformed feature vector component,

$F_{c,old}$ : feature vector component,

$MTR_{Sil}$ : mean value for silence of training feature vectors,

$MTR_{Sp}$ : mean value for speech of training feature vectors,

$M_{Sp}$ : mean value for speech of feature vectors,

$M_{Sil}$ : mean value for silence of feature vectors,

$P_{Sil}$ : silence probability,

$P_{Sp}$ : speech probability.

Furthermore the method for environmental adaptation is not only specified to feature vectors but it can also be applied to entire spectras in the log-spectral domain. Furthermore the essential sources of environmental mismatch between trained speech references and recognition data like signal-to-noise ratio, recording channel and varying speech-and-silence proportion in the utterances are handled simultaneously. Since the procedure and the method provide a simple computation algorithm it is especially suited for the utilization in digital signal processors (DSP) with low resources of memory and computation time.

In the following, preferred embodiments of the invention will be described in greater detail by making reference to the drawings in which:

Fig. 1 shows a flow chart diagram of a speech recognition system,
Fig. 2 is illustrative of a flow chart for performing an environmental adaptation,
Fig. 3 shows a monotonous decreasing probability function,

Fig. 4 shows a block diagram of a speech recognition system and an environmental adaptation according to the invention.

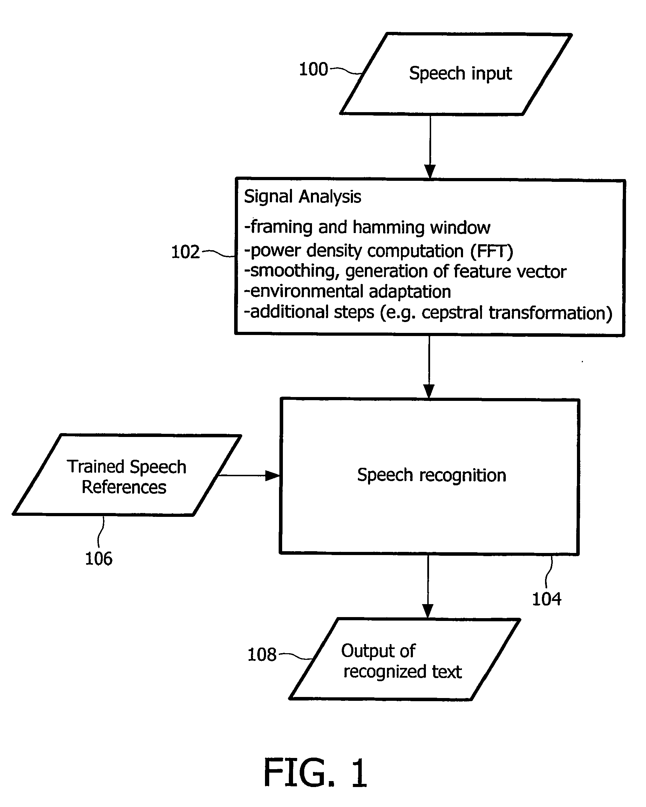

Figure 1 schematically shows a flow chart diagram of a speech recognition system. In a first step 100 speech is inputted into the system by means of some sort of recording device, such as a conventional microphone. In the next step 102, the recorded signals are analyzed by performing the following steps: segmenting the recorded signals into framed time windows, performing a power density computation, generating feature vectors in the log-spectral domain, performing an environmental adaptation and optionally performing additional steps.

In the first step of the signal analysis 102, the recorded speech signals are segmented into time windows covering a distinct time interval. Then the power spectrum for each time window is calculated by means of a Fast Fourier Transform (FFT). Based on the power spectrum, the feature vectors being descriptive on the most relevant frequency portions of the spectrum that are characteristic for the speech content. In the next step of the signal analysis 102 an environmental adaptation according to the present invention is performed in order to reduce a mismatch between the recorded signals and the reference signals extracted from training speech being stored in the system.

Furthermore additional steps may be optionally performed, such as a cepstral transformation. In the next step 104, the speech recognition is performed based on the comparison between the feature vectors based on training data and the feature vectors based on the actual signal analysis plus the environmental adaptation. The training data in form of trained speech references are provided as input to the speech recognition step 104 by the step 106. The recognized text is then outputted in step 108. Outputting of recognized text can be performed in a manifold of different ways, such as e.g. displaying the text on some sort of graphical user interface, storing the text on some sort of storage medium or by simply printing the text by means of some printing device.

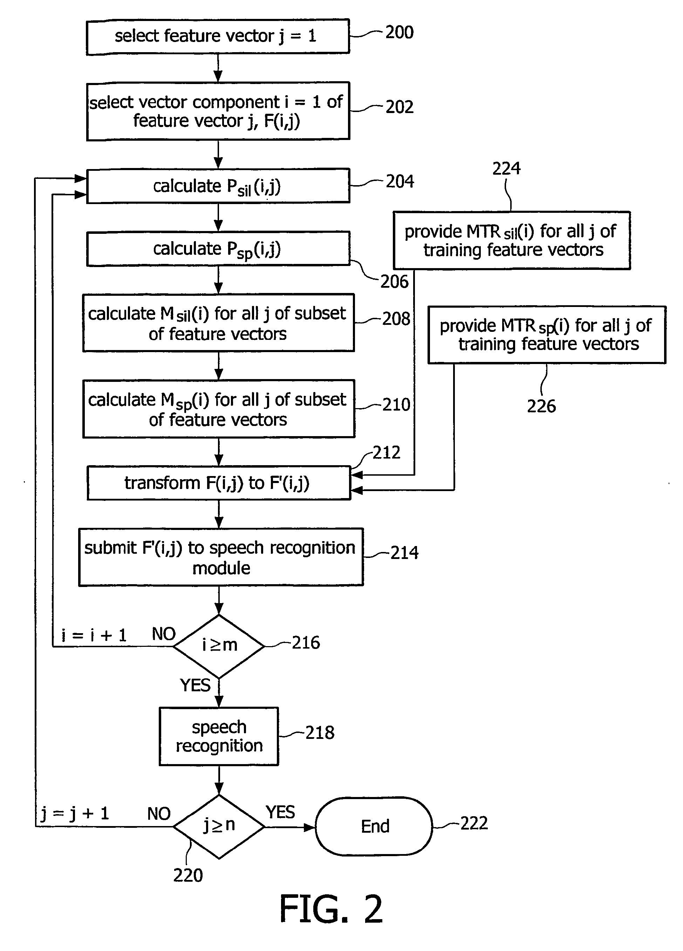

Figure 2 is illustrative of the environmental adaptation according to the present invention. The feature vectors provided by the speech recognition system are adapted to the specific environmental conditions. Here the single components i of each feature vector j are transformed in order to minimize the mismatch between feature vector components generated from received speech and feature vector components of training data.

In the first step 200, a feature vector (j = 1) is selected. In the next step 202 a single component (i = 1) of feature vector j is selected. The selected feature vector component is then passed to step 204 in which a silence probability of the feature vector component is calculated according to the probability function. In step 206, the appropriate speech probability of the feature vector component is calculated. The calculated silence and speech probabilities of the vector component are indicative whether the selected feature vector component represents speech or a speech discontinuity. In step 208 a mean value for silence of the feature vector component i of all feature vectors j is calculated. In step 210 the appropriate mean value for speech of the feature vector component i of all feature vectors j is calculated.

The calculation of the mean values for silence and the mean values for speech of a distinct component i of all feature vectors j is based on a moving weighted average function. In step 224 and 226, appropriate mean values for silence and mean values for speech for a distinct feature vector component i of the training feature vectors for all feature vectors j of training data are calculated and provided to step 212. Based on the selected feature vector component, the calculated silence probability of the feature vector component 204 and the calculated speech probability of the feature vector component of step 206 as well as the silence mean value of step 208, the speech mean value of step 210 and the silence and speech mean values of the training data of step 224 and step 226, the selected feature vector component is transformed into a new feature vector component in step 212.

The generated mean values for speech and for silence give an indication of environmental mismatch when compared to the appropriate mean values for silence and speech of the training data that were recorded under e.g. ideal, hence noise-less, environmental conditions. When the transformation of the feature vector components has been performed in step 212 the newly created feature vector components, hence the environmentally adapted feature vector components, are submitted in step 214 to the speech recognition module. After the adapted feature vector components have been submitted in step 214, the method checks whether the index i of the component of a feature vector is larger or equal the number m of components of a feature vector in step 216. If in step 216 the component index i is smaller than m, the number of components of a feature vector, then the component index i is incremented by 1 and the method returns to step 204. When in the other case the component index i is larger or equal the number of components of a feature vector m the method proceeds with step 218 in which the entire feature vector is subject to speech recognition performed by the speech recognition module. After the speech recognition of step 218, the step 220 checks whether the feature vector index j is larger or equal the number of feature vectors n. If the feature vector index j is smaller than n, then j is incremented by 1 and the method returns to step 204. In the other case, when j is larger or equal n, all feature vectors have been transformed and the method stops in step 222.

In order to reduce computation time and to increase the efficiency of the environmental adaptation method, the calculation of the mean values for silence and speech in step 208 and 210 not necessarily has to include all feature vectors. Instead the calculation of the mean silence and speech values can also be based on a subset of feature vectors. In such a case the mean values for silence and speech of the training feature vectors provided by the steps 224 and 226 also have to be based on the appropriate subset of training feature vectors. In this way not the entirety of feature vectors and training feature vectors have to be taken into account for the calculation of mean values for silence and speech necessary for all the environmental adaptation of the feature vectors.

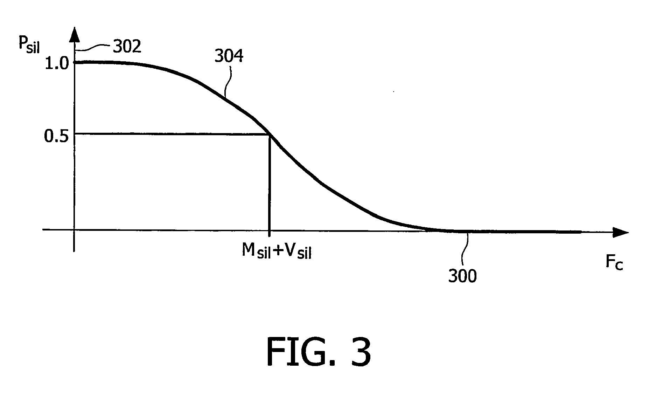

Figure 3 illustrates a typical probability function for the calculation of silence probability of a feature vector component. The abscissa 300 represents the modulus of a feature vector component, whereas the ordinate 302 gives the appropriate silence probability by means of the function illustrated by the graph 304. The probability function according to the invention can in principle be represented by any monotonous decreasing function. The function 304 is only an example of a Sigmoid function which is commonly used for probability distributions in speech recognition systems. Preferably the probability function gives a silence probability around 0.5 for the sum of the mean value for silence plus the appropriate variance value.

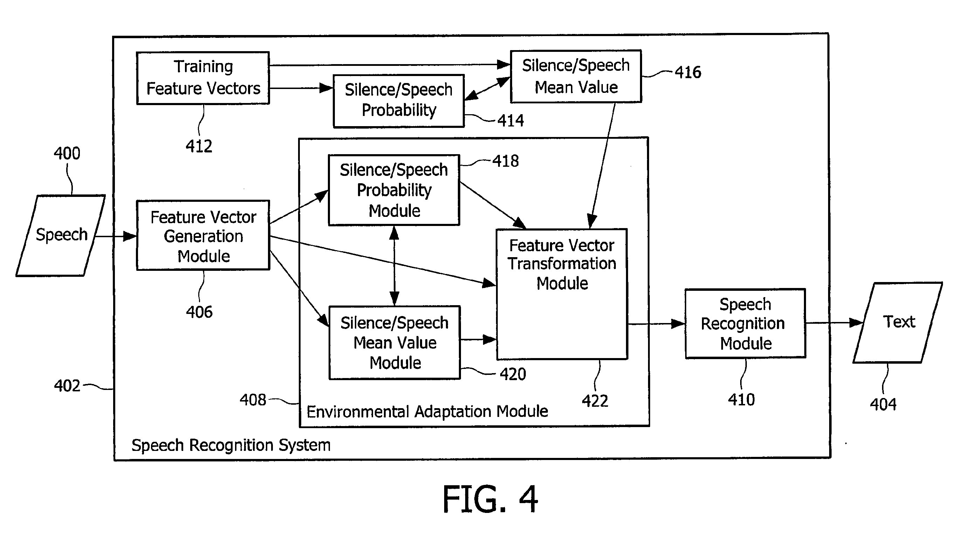

Figure 4 shows a block diagram of a speech recognition system 402 with an environmental adaptation according to the present invention. Generally speech 400 is inputted into the speech recognition system 402 which performs a speech to text transformation with the text 404 being outputted from the speech recognition system 402. The speech recognition system 402 comprises a feature vector generation module 406, an environmental adaptation module 408 and a speech recognition module 410. Furthermore the speech recognition system comprises training feature vectors 412 as well as memory modules 414 and 416 for storing and providing silence and speech probabilities as well as silence and speech mean values of the training feature vectors 412.

The environmental adaptation module 408 comprises a silence and speech probability module 418, a silence and speech mean value module 420 as well as a feature vector transformation module 422.

Recorded speech 400 is transmitted to the feature vector generation module 406. The feature vector generation module 406 performs the necessary steps in order to generate feature vectors in the log-spectral domain for speech recognition purpose. The generated feature vectors are then transmitted to the silence and speech probability module 418 and to the silence and speech mean value module 420 as well as to the feature vector transformation module 422 of the environmental adaptation module 408. The silence and speech probability module 418 calculates a speech and silence probability for each feature vector component in the same way as the silence and speech mean value module 420 calculates mean values for speech and silence for each feature vector component.

The so generated silence and speech probabilities as well as silence and speech mean values for each feature vector component are transmitted to the feature vector transformation module 422. Based on the transformation function, the specific feature vector component, the silence and speech probability as well as the mean values for silence and speech and the silence and speech mean values of the training feature vectors 412, the feature vector transformation module 422 performs a transformation of the specific feature vector component.

Since the transformation is performed for each component of all feature vectors, the entirety of feature vectors generated by the feature vector generation module 406 is environmentally adapted by creating a new set of feature vector components that are submitted to the speech recognition module 410. In the speech recognition module 410 the environmentally adapted feature vectors of the speech 400 are compared with training feature vectors 412 in order to assign portions of speech to text and text phrases. The recognized speech is then finally outputted as text 404.

LIST OF REFERENCE NUMERALS

| | |
|---|---|
| 400 | Speech |
| 402 | Speech recognition system |
| 404 | Text |
| 406 | Feature vector generation module |
| 408 | Environmental adaptation module |
| 410 | Speech recognition module |
| 412 | Training feature vectors |
| 414 | Memory for probability of training feature vectors |
| 416 | Memory for mean values of training feature vectors |
| 418 | Probability module |
| 420 | Mean value module |
| 422 | Feature vector transformation module |

**Claims**

**1.** A method of environmental adaptation of a speech recognition system (402) providing a sequence of feature vectors, each feature vector being descriptive of a power spectrum of speech (400) to be recognized, for each feature vector component, the method comprising the steps of:

- calculating a silence probability of the feature vector component by means of a monotonous decreasing probability function,
- providing mean values for silence and speech intervals of respective components of at least a sub-set of training feature vectors,
- calculating a mean value for silence and speech intervals for the feature vector component by means of a mean function based on at least a subset of respective feature vectors,
- transforming the feature vector component by means of a transformation function, the transformation function being based on the mean value for silence and speech of the feature vectors and the training feature vectors, the silence probability of the feature vector component and on the feature vector component itself.

**2.** The method according to claim 1, the method further for each feature vector component comprising the steps of:

- calculating a speech probability for speech by means of a monotonous increasing probability function,
- transforming the feature vector component by means of the transformation function, the transformation function being further based on the probability for speech of the feature vector component.

**3.** The method according to claim 1 or 2, wherein the mean function is a moving weighted average function, the calculation of the mean value for silence and speech intervals being based on the subset of feature vectors, the subset comprising at least a number of 10, preferably a number of 20 to 30 feature vectors.

**4.** The method according to any one of the claims 1 to 3, wherein providing of mean values for silence and speech intervals of the training feature vectors is based on a training mean function, which is a weighted average function for a subset of training feature vectors, the subset at least a number of 10, preferably a number of 20 to 30 feature vectors.

**5.** The method according to any one of the claims 1 to 4, wherein the probability function comprises a slope constant ($\alpha$ being descriptive of the slope of the monotonous probability function, the slope constant being modifiable.

**6.** The method according to any one of the claims 1 to 5, wherein the transformation of the feature vector component is given by:

$$F_{c,new} = F_{c,old} + \left(MTR_{Sil} - M_{Sil}\right)P_{Sil} + \left(MTR_{Sp} - M_{Sp}\right)P_{Sp},$$

where:

$F_{c,new}$ : transformed feature vector component,
$F_{c,old}$ : feature vector component,
$MTR_{Sil}$ : mean value for silence of training feature vectors,
$MTR_{Sp}$ : mean value for speech of training feature vectors,
$M_{Sp}$ : mean value for speech of feature vectors,
$M_{Sil}$ : mean value for silence of feature vectors,
$P_{Sil}$ : silence probability,
$P_{Sp}$ : speech probability.

**7.** The method according to any one of the claims 1 to 6, wherein the silence probability function is given by a Sigmoid function of the form:

$$P_{Sil} = 1 - \frac{1}{1 + \exp\left(\left(M_{Sil} + V_{Sil} - F_c\right)\alpha / V_{Sil}\right)},$$

and the speech probability function being given by:

$$P_{sp} = 1 - P_{Sil} \, ,$$

where:

$M_{Sil}$ : mean value for silence interval of the speech,
$V_{Sil}$ : variance from the mean value for silence,
$\alpha$ : slope constant,
$F_c$ : feature vector component.

8. A system for speech recognition (402) with environmental adaptation, providing a sequence of feature vectors, each feature vector being descriptive of a power spectrum of speech (400) to be recognized, for each feature vector component, the system comprising:

- means for calculating a silence probability (418) of the feature vector component by means of a monotonous decreasing probability function,
- means for providing mean values (416) for silence and speech intervals of respective components of at least a sub-set of training feature vectors,
- means for calculating a mean value for silence and speech intervals (420) for the feature vector component by means of a mean function based on at least a subset of respective feature vectors,
- means for transforming the feature vector component (422) by means of a transformation function, the transformation function being based on the mean value for silence and speech of the feature vectors and the training feature vectors, the silence probability of the feature vector component and on the feature vector component itself.

9. The system according to claim 8, the system for each feature vector component comprising:

- means for calculating a speech probability for speech (418) by means of a monotonous increasing probability function,
- means for transforming the feature vector component (422) by means of the transformation function, the transformation function being further based on the probability for speech of the feature vector component.

10. The system according to claim 8 or 9, wherein the mean function is a moving weighted average function, the calculation of the mean value for silence and speech intervals being based on the subset of feature vectors, the subset comprising at least a number of 10, preferably a number of 20 to 30 feature vectors.

11. The speech recognition system according to any one of the claims 8 to 10, wherein means to provide mean values for silence and speech of training feature vector components (416) comprise storage means in which the mean values for silence and speech of training feature vector components are stored.

12. A computer program product with computer program means for a system for speech recognition (402) with environmental adaptation providing a sequence of feature vectors, each feature vector being descriptive of a power spectrum of speech to be recognized, for each feature vector component the computer program product comprising program means which, when run on a computer, will cause the computer to execute the steps of:

- calculating a silence probability of the feature vector component by means of a monotonous decreasing probability function,
- providing mean values for silence and speech intervals of respective components of at least a sub-set of training feature vectors,
- calculating a mean value for silence and speech intervals for the feature vector component by means of a mean function based on at least a subset of respective feature vectors,
- transforming the feature vector component by means of a transformation function, the transformation function being based on the mean value for silence and speech of the feature vectors and the training feature vectors, the silence probability of the feature vector component and on the feature vector component itself.

13. The computer program product according to claim 12, for each feature vector component the computer program product comprising program means for:

- calculating a speech probability for speech by means of a monotonous increasing probability function,
- transforming the feature vector component by means of the transformation function, the transformation function being further based on the probability for speech of the feature vector component.

14. The computer program product according to claim 12 or 13, wherein the mean function is a moving weighted average function, the calculation of the mean value for silence and speech intervals being based on the subset of feature vectors, the subset comprising at least a number of 10, preferably a number of 20 to 30 feature vectors.

15. The computer program product according to any one of the claims 12 to 14 wherein the transformation of the feature vector component is given by:

$$F_{c,new} = F_{c,old} + (MTR_{Sil} - M_{Sil})P_{Sil} + (MTR_{Sp} - M_{Sp})P_{Sp},$$

where:

$F_{c,new}$ : transformed feature vector component,
$F_{c,old}$ : feature vector component,
$MTR_{Sil}$ : mean value for silence of training feature vectors,
$MTR_{Sp}$ : mean value for speech of training feature vectors,
$M_{Sp}$ : mean value for speech of feature vectors,
$M_{sil}$ : mean value for silence of feature vectors,
$P_{Sil}$ : silence probability,
$P_{Sp}$ : speech probability.

16. The computer program product according to any one of the claims 12 to 15 wherein the silence probability function is given by a Sigmoid function of the form:

$$P_{Sil} = 1 - \frac{1}{1 + \exp((M_{Sil} + V_{Sil} - F_c)\alpha / V_{Sil})},$$

and the speech probability function being given by:

$$P_{sp} = 1 - P_{Sil},$$

where:

$M_{Sil}$ : mean value for silence interval of the speech,
$V_{Sil}$ : variance from the mean value for silence,
$\alpha$ : slope constant,
$F_c$ : feature vector component.

**Patentansprüche**

1. Verfahren zur Anpassung eines Spracherkennungssystems (402) an Umgebungsbedingungen, das eine Merkmalsvektorfolge schafft, wobei jeder Merkmalsvektor ein Energiespektrum von zu erkennender Sprache (400) angibt, wobei das Verfahren für jede Merkmalsvektorkomponente folgende Schritte umfasst:

- Berechnen einer Stille-Wahrscheinlichkeit der Merkmalsvektorkomponente mit Hilfe einer monoton abnehmenden Wahrscheinlichkeitsfunktion,
- Schaffen von Mittelwerten für Stille- und Sprache-Intervalle von jeweiligen Komponenten von mindestens einem Teilsatz mit Trainingsmerkmalsvektoren,

- Berechnen eines Mittelwertes für Stille- und Sprache-Intervalle für die Merkmalsvektorkomponente mit Hilfe einer auf mindestens einem Teilsatz mit jeweiligen Merkmalsvektoren basierenden Mittelwertfunktion,
- Transformieren der Merkmalsvektorkomponente mit Hilfe einer Transformationsfunktion, wobei die Transformationsfunktion auf dem Mittelwert für Stille und Sprache der Merkmalsvektoren und der Trainingsmerkmalsvektoren, der Stille-Wahrscheinlichkeit der Merkmalsvektorkomponente und der Merkmalsvektorkomponente selbst basiert.

2. Verfahren nach Anspruch 1, wobei das Verfahren ferner für jede Merkmalsvektorkomponente folgende Schritte umfasst:

   - Berechnen einer Wahrscheinlichkeit für Sprache mit Hilfe einer monoton zunehmenden Wahrscheinlichkeitsfunktion,
   - Transformieren der Merkmalsvektorkomponente mit Hilfe der Transformationsfunktion, wobei die Transformationsfunktion ferner auf der Wahrscheinlichkeit für Sprache der Merkmalsvektorkomponente basiert.

3. Verfahren nach Anspruch 1 oder 2, wobei die Mittelwertfunktion eine gleitende gewichtete Mittelwertfunktion ist, wobei die Berechnung des Mittelwertes für Stille- und Sprache-Intervalle auf dem Teilsatz mit Merkmalsvektoren basiert, wobei der Teilsatz mindestens eine Anzahl von 10, vorzugsweise eine Anzahl von 20 bis 30 Merkmalsvektoren umfasst.

4. Verfahren nach einem der Ansprüche 1 bis 3, wobei das Schaffen von Mittelwerten für Stille- und Sprache-Intervalle der Trainingsmerkmalsvektoren auf einer Trainingsmittelwertfunktion basiert, die eine gewichtete Mittelwertfunktion für einen Teilsatz mit Trainingsmerkmalsvektoren ist, wobei der Teilsatz mindestens eine Anzahl von 10, vorzugsweise eine Anzahl von 20 bis 30 Merkmalsvektoren umfasst.

5. Verfahren nach einem der Ansprüche 1 bis 4, wobei die Wahrscheinlichkeitsfunktion eine Steigungskonstante ($\alpha$) umfasst, die die Steigung der monotonen Wahrscheinlichkeitsfunktion angibt, wobei die Steigungskonstante verändert werden kann.

6. Verfahren nach einem der Ansprüche 1 bis 5, wobei sich die Transformation der Merkmalsvektorkomponente ergibt aus:

$$F_{k,neu} = F_{k,alt} + \left(MTR_{St} - M_{St}\right)P_{St} + \left(MTR_{Sp} - M_{Sp}\right)P_{Sp},$$

wobei:

   $F_{k,neu}$ : transformierte Merkmalsvektorkomponente,
   $F_{k,alt}$ : Merkmalsvektorkomponente,
   $MTR_{St}$ : Mittelwert für Stille von Trainingsmerkmalsvektoren,
   $MTR_{Sp}$ : Mittelwert für Sprache von Trainingsmerkmalsvektoren,
   $M_{Sp}$ : Mittelwert für Sprache von Merkmalsvektoren,
   $M_{St}$ : Mittelwert für Stille von Merkmalsvektoren,
   $P_{St}$ : Stille-Wahrscheinlichkeit,
   $P_{Sp}$ : Sprache-Wahrscheinlichkeit.

7. Verfahren nach einem der Ansprüche 1 bis 6, wobei sich die Stille-Wahrscheinlichkeitsfunktion aus einer Sigmoidalfunktion in der Form

$$P_{St} = 1 - \frac{1}{1 + \exp\left(\left(M_{St} + V_{St} - F_k\right)\alpha / V_{St}\right)},$$

ergibt, und sich die Sprache-Wahrscheinlichkeitsfunktion ergibt aus:

$$P_{sp} = 1 - P_{St},$$

wobei:

$M_{St}$ : Mittelwert für Stille-Intervall der Sprache,
$V_{St}$ : Varianz vom Mittelwert für Stille,
$\alpha$ : Steigungskonstante,
$F_k$ : Merkmalsvektorkomponente.

8. System zur Spracherkennung (402) mit Anpassung an Umgebungsbedingungen, das eine Merkmalsvektorfolge schafft, wobei jeder Merkmalsvektor ein Energiespektrum von zu erkennender Sprache (400) angibt, wobei das System für jede Merkmalsvektorkomponente Folgendes umfasst:

- Mittel (418) zum Berechnen einer Stille-Wahrscheinlichkeit der Merkmalsvektorkomponente mit Hilfe einer monoton abnehmenden Wahrscheinlichkeitsfunktion,
- Mittel (416) zum Schaffen von Mittelwerten für Stille- und Sprache-Intervalle von jeweiligen Komponenten von mindestens einem Teilsatz mit Trainingsmerkmalsvektoren,
- Mittel (420) zum Berechnen eines Mittelwertes für Stille- und Sprache-Intervalle für die Merkmalsvektorkomponente mit Hilfe einer auf mindestens einem Teilsatz mit jeweiligen Merkmalsvektoren basierenden Mittelwertfunktion,
- Mittel (422) zum Transformieren der Merkmalsvektorkomponente mit Hilfe einer Transformationsfunktion, wobei die Transformationsfunktion auf dem Mittelwert für Stille und Sprache der Merkmalsvektoren und der Trainingsmerkmalsvektoren, der Stille-Wahrscheinlichkeit der Merkmalsvektorkomponente und der Merkmalsvektorkomponente selbst basiert.

9. System nach Anspruch 8, wobei das System für jede Merkmalsvektorkomponente Folgendes umfasst:

- Mittel (418) zum Berechnen einer Wahrscheinlichkeit für Sprache mit Hilfe einer monoton zunehmenden Wahrscheinlichkeitsfunktion,
- Mittel (422) zum Transformieren der Merkmalsvektorkomponente mit Hilfe der Transformationsfunktion, wobei die Transformationsfunktion ferner auf der Wahrscheinlichkeit für Sprache der Merkmalsvektorkomponente basiert.

10. System nach Anspruch 8 oder 9, wobei die Mittelwertfunktion eine gleitende gewichtete Mittelwertfunktion ist, wobei die Berechnung des Mittelwertes für Stille- und Sprache-Intervalle auf dem Teilsatz mit Merkmalsvektoren basiert, wobei der Teilsatz mindestens eine Anzahl von 10, vorzugsweise eine Anzahl von 20 bis 30 Merkmalsvektoren umfasst.

11. Spracherkennungssystem nach einem der Ansprüche 8 bis 10, wobei die Mittel (416) zum Schaffen von Mittelwerten für Stille- und Sprache-Intervalle der Trainingsmerkmalsvektoren Speichermittel umfassen, in denen die Mittelwerte für Stille und Sprache von Trainingsmerkmalsvektorkomponenten gespeichert werden.

12. Computerprogrammprodukt mit Computerprogrammmitteln für ein System zur Spracherkennung (402) mit Anpassung an Umgebungsbedingungen, das eine Merkmalsvektorfolge schafft, wobei jeder Merkmalsvektor ein Energiespektrum von zu erkennender Sprache angibt, wobei das Computerprogrammprodukt für jede Merkmalsvektorkomponente Programmmittel umfasst, die, wenn sie auf einem Computer laufen, den Computer veranlassen, folgende Schritte auszuführen:

- Berechnen einer Stille-Wahrscheinlichkeit der Merkmalsvektorkomponente mit Hilfe einer monoton abnehmenden Wahrscheinlichkeitsfunktion,
- Schaffen von Mittelwerten für Stille- und Sprache-Intervalle von jeweiligen Komponenten von mindestens einem Teilsatz mit Trainingsmerkmalsvektoren,
- Berechnen eines Mittelwertes für Stille- und Sprache-Intervalle für die Merkmalsvektorkomponente mit Hilfe einer auf mindestens einem Teilsatz mit jeweiligen Merkmalsvektoren basierenden Mittelwertfunktion,
- Transformieren der Merkmalsvektorkomponente mit Hilfe einer Transformationsfunktion, wobei die Transformationsfunktion auf dem Mittelwert für Stille und Sprache der Merkmalsvektoren und der Trainingsmerkmalsvektoren, der Stille-Wahrscheinlichkeit der Merkmalsvektorkomponente und der Merkmalsvektorkomponente selbst basiert.

13. Computerprogrammprodukt nach Anspruch 12, wobei das Computerprogrammprodukt für jede Merkmalsvektorkomponente Programmmittel für Folgendes umfasst:

- Berechnen einer Wahrscheinlichkeit für Sprache mit Hilfe einer monoton zunehmenden Wahrscheinlichkeitsfunktion,
- Transformieren der Merkmalsvektorkomponente mit Hilfe der Transformationsfunktion, wobei die Transformationsfunktion ferner auf der Wahrscheinlichkeit für Sprache der Merkmalsvektorkomponente basiert.

14. Computerprogrammprodukt nach Anspruch 12 oder 13, wobei die Mittelwertfunktion eine gleitende gewichtete Mittelwertfunktion ist, wobei die Berechnung des Mittelwertes für Stille- und Sprache-Intervalle auf dem Teilsatz mit Merkmalsvektoren basiert, wobei der Teilsatz mindestens eine Anzahl von 10, vorzugsweise eine Anzahl von 20 bis 30 Merkmalsvektoren umfasst.

15. Computerprogrammprodukt nach einem der Ansprüche 12 bis 14, wobei sich die Transformation der Merkmalsvektorkomponente ergibt aus:

$$F_{k,neu} = F_{k,alt} + \left(MTR_{St} - M_{St}\right)P_{St} + \left(MTR_{Sp} - M_{Sp}\right)P_{Sp},$$

wobei:

$F_{k,neu}$ : transformierte Merkmalsvektorkomponente,
$F_{k,alt}$ : Merkmalsvektorkomponente,
$MTR_{St}$ : Mittelwert für Stille von Trainingsmerkmalsvektoren,
$MTR_{Sp}$ : Mittelwert für Sprache von Trainingsmerkmalsvektoren,
$M_{Sp}$ : Mittelwert für Sprache von Merkmalsvektoren,
$M_{St}$ : Mittelwert für Stille von Merkmalsvektoren,
$P_{St}$ : Stille-Wahrscheinlichkeit,
$P_{Sp}$ : Sprache-Wahrscheinlichkeit.

16. Computerprogrammprodukt nach einem der Ansprüche 12 bis 15, wobei sich die Stille-Wahrscheinlichkeitsfunktion aus einer Sigmoidalfunktion in der Form

$$P_{St} = 1 - \frac{1}{1 + \exp\left(\left(M_{St} + V_{St} - F_k\right)\alpha / V_{St}\right)},$$

ergibt, und sich die Sprache-Wahrscheinlichkeitsfunktion ergibt aus:

$$P_{sp} = 1 - P_{St},$$

wobei:

$M_{St}$ : Mittelwert für Stille-Intervall der Sprache,
$V_{St}$ : Varianz vom Mittelwert für Stille,
$\alpha$ : Steigungskonstante,
$F_k$ : Merkmalsvektorkomponente.

**Revendications**

1. Procédé d'adaptation environnementale d'un système de reconnaissance vocale (402) fournissant une séquence de vecteurs caractéristiques, chaque vecteur caractéristique décrivant un spectre de puissance de voix (400) à reconnaître, pour chaque composante de vecteur caractéristique, le procédé comprenant les étapes suivantes:

   - calcul d'une probabilité de silence de la composante de vecteur caractéristique au moyen d'une fonction de probabilité monotone décroissante,
   - fourniture de valeurs moyennes d'intervalles de silence et de voix de composantes respectives d'au moins un sous-ensemble de vecteurs caractéristiques d'apprentissage,
   - calcul d'une valeur moyenne d'intervalles de silence et de voix pour la composante de vecteur caractéristique au moyen d'une fonction moyenne basée sur au moins un sous-ensemble de vecteurs caractéristiques respectifs,
   - transformation de la composante de vecteur caractéristique au moyen d'une fonction de transformation, la fonction de transformation étant basée sur la valeur moyenne de silence et de voix des vecteurs caractéristiques et des vecteurs caractéristiques d'apprentissage, sur la probabilité de silence de la composante de vecteur caractéristique et sur la composante de vecteur caractéristique elle-même.

2. Procédé selon la revendication 1, le procédé comprenant de plus pour chaque composante de vecteur caractéristique les étapes suivantes:

   - calcul d'une probabilité de voix pour la voix au moyen d'une fonction de probabilité monotone croissante,
   - transformation de la composante de vecteur caractéristique au moyen de la fonction de transformation, la fonction de transformation étant de plus basée sur la probabilité de voix de la composante de vecteur caractéristique.

3. Procédé selon la revendication 1 ou 2, dans lequel la fonction moyenne est une fonction moyenne pondérée mobile, le calcul de la valeur moyenne d'intervalles de silence et de voix étant basé sur un sous-ensemble de vecteurs caractéristiques, le sous-ensemble comprenant au moins un nombre de vecteurs caractéristiques de 10, de préférence un nombre de 20 à 30.

4. Procédé selon l'une quelconque des revendications 1 à 3, dans lequel la fourniture de valeurs moyennes d'intervalles de silence et de voix des vecteurs caractéristiques d'apprentissage est basée sur une fonction moyenne d'apprentissage, qui est une fonction moyenne pondérée pour un sous-ensemble de vecteurs caractéristiques d'apprentissage, le sous-ensemble comprenant au moins un nombre de vecteurs caractéristiques de 10, de préférence un nombre de 20 à 30.

5. Procédé selon l'une quelconque des revendications 1 à 4, dans lequel la fonction de probabilité comprend une constante de pente ($\alpha$) décrivant la pente de la fonction de probabilité monotone, la constante de pente étant modifiable.

6. Procédé selon l'une quelconque des revendications 1 à 5, dans lequel la transformation de la composante de vecteur caractéristique est donnée par :

$$F_{c,new} = F_{c,old} + \left(MTR_{Sil} - M_{Sil}\right)P_{Sil} + \left(MTR_{Sp} - M_{Sp}\right)P_{Sp},$$

où:

$F_{c,new}$ : composante de vecteur caractéristique transformée,
$F_{c,old}$ : composante de vecteur caractéristique,
$MTR_{Sil}$ : valeur moyenne de silence de vecteurs caractéristiques d'apprentissage,
$MTR_{Sp}$ : valeur moyenne de voix de vecteurs caractéristiques d'apprentissage,
$M_{Sp}$ : valeur moyenne de voix de vecteurs caractéristiques,
$M_{Sil}$ : valeur moyenne de silence de vecteurs caractéristiques,
$P_{Sil}$ : probabilité de silence,
$P_{Sp}$ : probabilité de voix.

**7.** Procédé selon l'une quelconque des revendications 1 à 6, dans lequel la fonction de probabilité de silence est donnée par une fonction sigmoïde sous la forme suivante :

$$P_{Sil} = 1 - \frac{1}{1 + \exp\left((M_{Sil} + V_{Sil} - F_c)\alpha / V_{Sil}\right)},$$

la fonction de probabilité de voix étant donnée par :

$$P_{sp} = 1 - P_{Sil},$$

où :

$M_{Sil}$ : valeur moyenne d'intervalle silence de la voix,
$V_{Sil}$ : variance de la valeur moyenne de silence,
$\alpha$ : constante de pente,
$F_c$ : composante de vecteur caractéristique.

**8.** Système de reconnaissance vocale (402) avec adaptation environnementale, fournissant une séquence de vecteurs caractéristiques, chaque vecteur caractéristique décrivant un spectre de puissance de voix (400) à reconnaître, pour chaque composante de vecteur caractéristique, le système comprenant :

- des moyens pour calculer une probabilité de silence (418) de la composante de vecteur caractéristique au moyen d'une fonction de probabilité monotone décroissante,
- des moyens pour fournir des valeurs moyennes (416) d'intervalles de silence et de voix de composantes respectives d'au moins un sous-ensemble de vecteurs caractéristiques d'apprentissage,
- des moyens pour calculer une valeur moyenne d'intervalles de silence et de voix (420) pour la composante de vecteur caractéristique au moyen d'une fonction moyenne basée sur au moins un sous-ensemble de vecteurs caractéristiques respectifs,
- des moyens pour transformer la composante de vecteur caractéristique (422) au moyen d'une fonction de transformation, la fonction de transformation étant basée sur la valeur moyenne de silence et de voix des vecteurs caractéristiques et des vecteurs caractéristiques d'apprentissage, sur la probabilité de silence de la composante de vecteur caractéristique et sur la composante de vecteur caractéristique elle-même.

**9.** Système selon la revendication 8, le système comprenant pour chaque composante de vecteur caractéristique :

- des moyens pour calculer une probabilité de voix pour la voix (418) au moyen d'une fonction de probabilité monotone croissante,
- des moyens pour transformer la composante de vecteur caractéristique (422) au moyen de la fonction de transformation, la fonction de transformation étant de plus basée sur la probabilité de voix de la composante de vecteur caractéristique.

**10.** Système selon la revendication 8 ou 9, dans lequel la fonction moyenne est une fonction moyenne pondérée mobile, le calcul de la valeur moyenne d'intervalles de silence et de voix étant basé sur le sous-ensemble de vecteurs caractéristiques, le sous-ensemble comprenant au moins un nombre de vecteurs caractéristiques de 10, de préférence un nombre de 20 à 30.

**11.** Système de reconnaissance vocale selon l'une quelconque des revendications 8 à 10, dans lequel un moyen de fourniture de valeurs moyennes de silence et de voix de composantes de vecteur caractéristique d'apprentissage (416) comprend un moyen de stockage dans lequel les valeurs moyennes de silence et de voix de composantes de vecteur caractéristique d'apprentissage sont stockées.

**12.** Produit de programme informatique avec moyen sous forme de programme informatique pour un système de reconnaissance vocale (402) avec adaptation environnementale fournissant une séquence de vecteurs caractéristiques, chaque vecteur caractéristique décrivant un spectre de puissance de voix à reconnaître, pour chaque composante de vecteur caractéristique, le produit de programme informatique comprenant un moyen sous forme de programme qui, quand exécuté sur un ordinateur, amènera l'ordinateur à exécuter les étapes suivantes :

- calcul d'une probabilité de silence de la composante de vecteur caractéristique au moyen d'une fonction de probabilité monotone décroissante,
- fourniture de valeurs moyennes d'intervalles de silence et de voix de composantes respectives d'au moins un sous-ensemble de vecteurs caractéristiques d'apprentissage,
- calcul d'une valeur moyenne d'intervalles de silence et de voix pour la composante de vecteur caractéristique au moyen d'une fonction moyenne basée sur au moins un sous-ensemble de vecteurs caractéristiques respectifs,
- transformation de la composante de vecteur caractéristique au moyen d'une fonction de transformation, la fonction de transformation étant basée sur la valeur moyenne de silence et de voix des vecteurs caractéristiques et des vecteurs caractéristiques d'apprentissage, sur la probabilité de silence de la composante de vecteur caractéristique et sur la composante de vecteur caractéristique elle-même.

13. Produit de programme informatique selon la revendication 12, le produit de programme informatique comprenant pour chaque composante de vecteur caractéristique un moyen informatique pour :

- calculer une probabilité de voix pour la voix au moyen d'une fonction de probabilité monotone croissante,
- transformer la composante de vecteur caractéristique au moyen de la fonction de transformation, la fonction de transformation étant de plus basée sur la probabilité de voix de la composante de vecteur caractéristique.

14. Produit de programme informatique selon la revendication 12 ou 13, dans lequel la fonction moyenne est une fonction moyenne pondérée mobile, le calcul de la valeur moyenne d'intervalles de silence et de voix étant basé sur le sous-ensemble de vecteurs caractéristiques, le sous-ensemble comprenant au moins un nombre de vecteurs caractéristiques de 10, de préférence un nombre de 20 à 30.

15. Produit de programme informatique selon l'une quelconque des revendications 12 à 14, dans lequel la transformation de la composante de vecteur caractéristique est donnée par :

$$F_{c,new} = F_{c,old} + \left(MTR_{Sil} - M_{Sil}\right)P_{Sil} + \left(MTR_{Sp} - M_{Sp}\right)P_{Sp},$$

où:

$F_{c,new}$ : composante de vecteur caractéristique transformée,
$F_{c,old}$ : composante de vecteur caractéristique,
$MTR_{Sil}$ : valeur moyenne de silence de vecteurs caractéristiques d'apprentissage,
$MTR_{Sp}$ : valeur moyenne de voix de vecteurs caractéristiques d'apprentissage,
$M_{Sp}$ : valeur moyenne de voix de vecteurs caractéristiques,
$M_{Sil}$ : valeur moyenne de silence de vecteurs caractéristiques,
$P_{Sil}$ : probabilité de silence,
$P_{Sp}$ : probabilité de voix.

16. Produit de programme informatique selon l'une quelconque des revendications 12 à 15, dans lequel la fonction de probabilité de silence est donnée par une fonction sigmoïde de la forme :

$$P_{Sil} = 1 - \frac{1}{1 + \exp\left(\left(M_{Sil} + V_{Sil} - F_c\right)\alpha / V_{Sil}\right)},$$

la fonction de probabilité de voix étant donnée par:

$$P_{sp} = 1 - P_{Sil},$$

où:

$M_{Sil}$ : valeur moyenne d'intervalle de silence de la voix,
$V_{Sil}$ : variance de la valeur moyenne de silence,
$\alpha$ : constante de pente,
$F_c$ : composante de vecteur caractéristique.

100 — Speech input

102 — Signal Analysis

-framing and hamming window
-power density computation (FFT)
-smoothing, generation of feature vector
-environmental adaptation
-additional steps (e.g. cepstral transformation)

Trained Speech References

106

Speech recognition

104

108 — Output of recognized text

FIG. 1

FIG. 2

Flowchart:

select feature vector j = 1 — 200

↓

select vector component i = 1 of feature vector j, F(i,j) — 202

↓

calculate $P_{sil}(i,j)$ — 204

↓

calculate $P_{sp}(i,j)$ — 206

↓

calculate $M_{sil}(i)$ for all j of subset of feature vectors — 208

↓

calculate $M_{sp}(i)$ for all j of subset of feature vectors — 210

↓

transform F(i,j) to F'(i,j) — 212

↓

submit F'(i,j) to speech recognition module — 214

↓

i ≥ m — 216
NO: i = i + 1
YES ↓

speech recognition — 218

↓

j ≥ n — 220
NO: j = j + 1
YES → End — 222

provide $MTR_{sil}(i)$ for all j of training feature vectors — 224

provide $MTR_{sp}(i)$ for all j of training feature vectors — 226

FIG. 3

FIG. 4